# EUROPÄISCHE PATENTANMELDUNG

(11) **EP 2 535 780 A2**
(43) Veröffentlichungstag der Anmeldung: **19.12.2012**
(21) Anmeldenummer: 12004313.8
(22) Anmeldetag: 06.06.2012
(51) Int. Cl.: G05B 19/416, B65G 67/04

(54) **Verfahren zum automatischen Einlernen von Parametern**

(30) Priorität: 14.06.2011 DE 102011104187
(71) Anmelder: Multivac Sepp Haggenmüller GmbH & Co. KG, 87787 Wolfertschwenden (DE)
(72) Erfinder: Ickert, Lars, 87437 Kempten (DE)
(74) Vertreter: Grünecker, Kinkeldey, Stockmair & Schwanhäusser

(57) **Zusammenfassung**

Die Erfindung bezieht sich auf ein Verfahren zum automatischen Einlernen von Parametern auf einer Schalenverschließmaschine, beispielsweise von Positionswerten, Beschleunigungswerten und/oder Strecken.

## Beschreibung

Die Erfindung bezieht sich auf ein Verfahren zum automatischen Einlernen von Parametern auf einer Schalenverschließmaschine gemäß den Merkmalen des Anspruchs 1.

Schalenverschließmaschinen, wie sie auch von der Anmelderin angeboten werden, sind in der DE 10 2008 030 510 A1 offenbart. Schalenverschließmaschinen, wie beispielsweise aus der DE 10 2006 030 434 A1 bekannt, die beim Transport von Schalen mit Transportbändern im Bereich der Zuführung vor der Siegelstation ausgerüstet sind, sind einerseits flexibel im Einsatz von Schalen unterschiedlicher Geometrien und andererseits müssen die Geometrien in der Steuerung bekannt bzw. vorhanden sein, um die einzelnen Schalen mittels Transportbändern auf einem Sammelband auf vorgegebene Positionen zu transportieren bzw. positionieren, wenn sie von einem Greifersystem übernommen und einer Siegelstation zugeführt werden sollen.

Um eine hohe Leistung zu erhalten, können vom Bediener an der Maschinensteuerung Bandgeschwindigkeiten und Bandbeschleunigungen verändert werden. Die Anpassung von Parametern wie Bandgeschwindigkeiten oder Bandbeschleunigungen durch Ausprobieren ist für den Bediener oft zeitaufwendig. Dabei spielt die Haftung des Schalenbodens der mit Produkt gefüllten Schale auf der Bandoberfläche der Transportbänder eine große Rolle. Diese kann sich auch während des Produktionsprozesses durch zunehmende Luftfeuchtigkeit oder flüssige Produktreste verändern und es kommt zu Fehlpositionierungen auf dem Sammelband. Das Greifersystem ist dann eventuell nicht mehr in der Lage die Schalen zu erfassen und die Schalenverschließmaschine hält an. Somit ist ein wiederholtes Verändern von verschiedenen Parametern durch den Bediener während des gesamten Prozesses notwendig, um die Leistung hoch zu halten oder zu maximieren. Die Einstellparameter und die Zusammenhänge bzw. die Auswirkung bei einer Veränderung dieser Parameter auf den Prozess ist für den Bediener oft nur schwer zu verstehen und er benötigt einige Versuche und Zeit, bis eine gewünschte Leistung bei gleichzeitig hoher Prozesssicherheit eingestellt ist.

Aufgabe der vorliegenden Erfindung ist es, die Leistung einer Schalenverschließmaschine zu erhöhen.

Diese Aufgabe wird gelöst durch ein Verfahren mit den Merkmalen des Anspruchs 1. Vorteilhafte Weiterbildungen der Erfindung sind in den Unteransprüchen angegeben.

Bei dem erfindungsgemäßen Verfahren zum automatischen Einlernen von Parametern für den Betrieb einer Schalenverschließmaschine sind folgende Schritte vorgesehen:
- Aktivieren eines Einlernprogramms über eine Steuerung, beispielsweise durch den Bediener,
- Bewegen wenigstens einer Schale mit einer ersten Beschleunigung auf eine erste Geschwindigkeit entgegen einer Produktionsrichtung der Schalenverschließmaschine mittels eines Sammelbands,
- Übergeben von Schalen geschwindigkeitssynchron von dem Sammelband auf ein Zuführband, das stromaufwärts bezogen auf die Produktionsrichtung vor dem Sammelband angeordnet ist,
- Erfassen einer Position wenigstens einer Schale mittels eines Sensors, der entlang des Sammelbands oder des Zuführbands vorgesehen ist,
- Verarbeiten von Weginformationen einer Schale in der Steuerung.

Der Vorteil liegt dabei in dem automatisch durch die Schalenverschließmaschine selbst ausgeführten Ablauf, der die Schalen von einer Position auf dem Sammelband rückwärts auf das Zuführband transportiert wird und dabei von einem Sensor erfasst wird, damit die Position der Schale auf den Bändern in der Steuerung bekannt ist. Vor der Aktivierung des Einlernprogramms ist das Zuführband von Schalen freizuhalten oder zu räumen.

Besonders vorteilhaft ist das Verfahren mit folgenden Schritten:
- Ein- oder mehrmaliges Bewegen wenigstens einer Schale mit einem Bewegungsabschnitt in Produktionsrichtung und einem weiteren Bewegungsabschnitts entgegen der Produktionsrichtung, wobei bei mindestens jedem zweiten Bewegungsabschnitt (bzw. allgemein nach jedem n-ten Abschnitt) die maximal in diesem Bewegungsabschnitt erreichte Beschleunigung erhöht wird,
- Beenden der Einlernphase, nachdem eine Abbruchbedingung erfüllt wurde, und Übernahme eines Beschleunigungswertes, der unterhalb des Beschleunigungswertes beim Beenden war, in die Steuerung.

Die Ermittlung der maximal möglichen Beschleunigung der Schalen ist entscheidend für die Erhöhung der Leistung der Schalenverschließmaschine, um möglichst schnell und damit möglichst viele Schalen transportieren zu können. Dabei ist die Beschleunigung vor allem von der Haftung des Schalenbodens auf dem Zuführ- und dem Sammelband abhängig. Auf die Haftung haben die Gewichtskraft der Schale mit dem Produkt, die Querkraft durch die Beschleunigung der Bänder und der Reibungskoeffizient zwischen der Bandoberfläche und dem Schalenboden einen Einfluss. Der Reibungskoeffizient kann sich während der Produktionszeit verändern durch Veränderung der Luftfeuchtigkeit oder durch unbeabsichtigte Ablagerungen von flüssigen Produktresten auf dem Band, die beispielsweise beim Füllvorgang an den Schalenrand gelangen und sich dann wenigstens teilweise auf einem Band ablagern können. Diese Veränderung auf der Oberfläche des Bandes verschlechtert meist den Reibungskoeffizienten, und die Schalen können vor allem beim Beschleunigen und Abbremsen verrutschen und somit ihre Position gegenüber dem Band verändern und werden nicht mehr korrekt in die Abholposition transportiert. Die Greifer konnten dann in herkömmlichen Systemen die Schalen nicht mehr korrekt erfassen und es kam zu Ausfallzeiten, um diese Situation zu berichtigen.

Vorzugsweise ist die Abbruchbedingung für das Beenden der Einlernphase das Vorliegen einer mittels des Sensors erkannten Positionsabweichung der Schale auf dem Sammelband oder dem Zuführband, um so ein Überschreiten der maximal bei den momentanen Bedingungen möglichen, noch nicht zu einer Positionsabweichung führenden Beschleunigung automatisch zu erkennen.

Alternativ ist die Abbruchbedingung ein vom Bediener ausgelöstes Beenden des Prozesses, wenn visuell ein unzulässiges Ereignis erkannt wurde. Vor allem bei flüssigen oder pastösen Produkten kann es zum Überschwappen von Produkten aus der Schale kommen, noch bevor ein Verrutschen der Schalen auf einem Band eintritt. Der Bediener kann das Einlernverfahren daraufhin beenden.

Vorzugsweise sind folgende Schritte vorgesehen:
- Herstellen eines Zustandes der Schalenverschließmaschine , bei der eine Schale oder eine Gruppe von Schalen von einer Greifereinheit, die einen Greiferschlitten und wenigstens einen Greifer umfasst, freigegeben wird, so dass sich die Schale oder die Gruppe von Schalen in einer Abholposition befindet,
- Erfassen des von der Schale zurückgelegten Weges von der Abholposition bis zum Sensor.

Da die Abholposition der Schalen vom Sammelband durch die Greifereinheit definiert wird, um die Schalen in die Arbeitsstation zum Versiegeln mit einer Deckelfolie zu übergeben, ist es vorteilhaft, die Schale oder die Schalen vor der Aktivierung des Einlernprogramms mittels der Greifereinheit auf dem Sammelband zu platzieren. Dies kann durch Einlegen der Schale in einen geschlossenen Greifer ausgeführt werden, um die Abholposition in Produktionsrichtung zu erhalten. Die entgegen der Produktionsrichtung vorzugsweise langsame Bewegung der Schalen bis zum Sensor und auch darüber hinaus führt zur Ermittlung des zurückgelegten Weges der Schalen von der Abholposition zum Sensor. Während des Normalbetriebs ist dieser Weg dem Weg gleichzusetzen, den die Schale vom Sensor zur Abholposition zurückzulegen hat bzw. dies führt zur Zielposition jeder einzelnen Schale.

Bevorzugt wird der zurückgelegte Weg in der Steuerung verarbeitet, und/oder die vordere und hintere Seitenwand der Schale mittels des Sensors erfasst und eine Länge in der Steuerung verarbeitet, um vorzugsweise die Mitte der Schale zu ermitteln. Aus den erfassten Signalen des Sensors von zwei benachbarten Schalen kann der Abstand der Schalen automatisch ermittelt werden. Bisher war es üblich, dass nach einem Formatwechsel und Umbauten an der Greifereinheit der Wert für den Abstand der Schalen an der Abholposition vom Bediener aus Zeichnungen oder dergleichen ermittelt und händisch an der Eingabeeinheit der Steuerung eingegeben wurde. Die vorteilhafte automatisierte Ermittlung durch das Einlernprogramm ist für den Bediener eine wesentliche Erleichterung.

In einer bevorzugten Ausgestaltung der Erfindung verfährt der Greiferschlitten in die Abholposition für die Schale oberhalb des Sammelbands, da ein händisches Verschieben des Greiferschlittens gegen einen Anschlag in Richtung des Sammelbands oft nicht die beste Position darstellt. Über die bekannte maximale Wegstrecke des Schlittens positioniert die Steuerung den Greiferschlitten in eine optimale Abholposition.

In einer weiter verbesserten Ausgestaltung wird die mit Produkt gefüllte Schale in die geschlossenen Greifer innerhalb der Arbeitsstation oder in eine Schalenaufnahme der Arbeitsstation eingelegt. Dies erleichtert es dem Bediener, die Schalen in eine vorbereitete und eindeutige Position innerhalb der Arbeitsstation einzulegen. Der Greifer kann dann mit den Schalen in die eigentliche Abholposition verfahren

Eine weitere vorteilhafte Variante sieht folgende Schritte vor:
- Übergeben der Schale vom Zuführband auf das Sammelband oder vom Sammelband auf das Zuführband, wobei die Übergabe einen geschwindigkeitssynchronen und einen geschwindigkeitsasynchronen Anteil aufweist.
- Wiederholendes Übergeben der Schale zwischen dem Sammelband und dem Zuführband mit einer beim jedem Richtungswechsel oder bei jedem zweiten Richtungswechsel (allgemein bei jedem n-ten Richtungswechsel) weiter verringerten geschwindigkeitssynchronen Anteil, bis mittels des Sensors von der Steuerung ein Positionsfehler der Schale festgestellt wird,
- Beenden der Einlernphase und Übernahme eines Wertes für die Zeit oder den Weg des geschwindigkeitssynchronen Anteils, der mindestens so groß ist wie der beim Beenden der Einlernphase eingenommene Wert, in die Steuerung.

Um die Leistung der Schalenverschließmaschine noch weiter zu steigern, sollte die Zeit, in der bei einer Übergabe einer Schale vom Zuführband auf das Sammelband die Geschwindigkeiten beider Bänder synchronisiert sind, um die Position der Schalen auch bei Bandübergängen sicherzustellen, nur so lang wie notwendig sein. Je kürzer die gemeinsame Synchronisierung ist, desto flexibler können die einzelnen Bänder unabhängig voneinander mit maximaler Effizienz gesteuert werden. Bei unterschiedlichen Ausgestaltungen des Packungsbodens ist es nicht mehr notwendig, ein gemessenes Außenmaß in Produktionsrichtung in die Steuerung einzugeben und zu verwenden. Ein möglicher kürzerer geschwindigkeitssynchroner Anteil bei der Bandübergabe kann somit durch das erfinderische Verfahren automatisch ermittelt werden.

Um nach dem Beenden der Einlernphase einen geeigneten Wert des geschwindigkeitssynchronen Anteils in die Steuerung zu übernehmen, wird der beim Beenden der Einlernphase eingenommene Wert um wenigstens 2%, vorzugsweise um 5% erhöht oder der letzte Wert übernommen, bei dem noch kein Abbruch ausgelöst wurde. Dies gewährleistet eine sichere Übergabe der Schale beim Bandübergang und ermöglicht gleichzeitig bei einer geeigneten Ausgestaltung des Schalenbodens eine Verkürzung des geschwindigkeitssynchronen Anteils.

Die Übernahme der Werte in die Steuerung kann durch die Steuerung selbst automatisch erfolgen oder durch den Bediener am Display bestätigt werden. Dabei besteht für den Bediener die Möglichkeit einer Veränderung der Werte vor der Bestätigung.

Im Folgenden wird ein vorteilhaftes Ausführungsbeispiel der Erfindung anhand einer Zeichnung näher erläutert.

Im Einzelnen zeigen:
- Figur 1: eine perspektivische Ansicht einer Schalenverschließmaschine (Traysealer),
- Figur 2: eine schematische Seitenansicht mit Zuführband, Sammelband und Arbeitsstation,
- Figur 3: eine schematische Seitenansicht während einer Einlernphase,
- Figur 4: eine schematische Seitenansicht während einer Ausgestaltung der Einlernphase,
- Figur 5a: ein Weg-Geschwindigkeitsdiagramm mit einer Beschleunigung für die Bewegung der Schale entgegen der Produktionsrichtung,
- Figur 5b: ein Weg-Geschwindigkeitsdiagramm mit einer erhöhten Beschleunigung für die Bewegung der Schale in der Produktionsrichtung,
- Figur 6: Ablaufdiagramm eines erfindungsgemäßen Verfahrens.

Gleiche Komponenten sind in den Figuren durchgängig mit gleichen Bezugszeichen versehen.

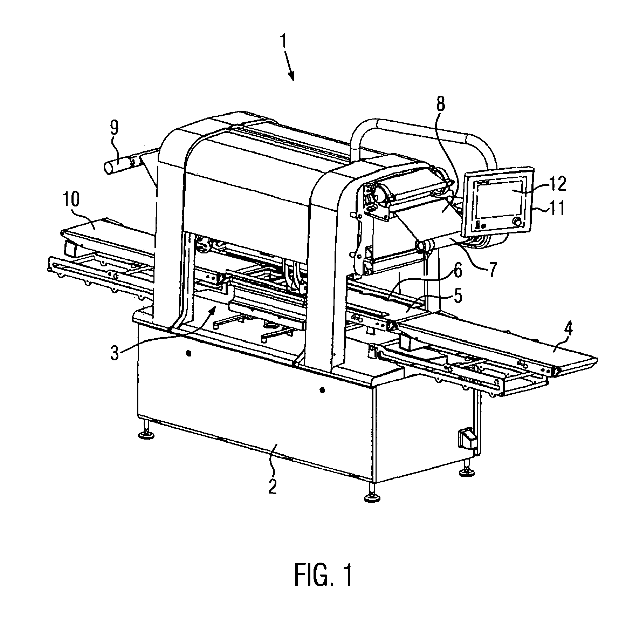

Figur 1 zeigt in perspektivischer Ansicht eine Schalenverschließmaschine 1 zum Betreiben mit einem erfindungsgemäßen Verfahren. Auf einem Gestell 2 befindet sich eine Arbeitsstation 3, im vorliegenden Fall eine Begasungs-, Siegel- und Schneidstation. Ein Zuführband 4 transportiert mit Produkt gefüllte Schalen (nicht dargestellt) und übergibt diese einem Sammelband 5, auf dem die Schalen in einem vorgegebenen Abstand in eine Abholposition positioniert werden, um von Greifern 6 vom Sammelband 5 in die Arbeitsstation 3 übergeben zu werden. Von einem Folienspender 7 wird eine Deckelfolie 8 abgezogen und ebenfalls in die Arbeitsstation 3 geführt.

Nach dem Evakuieren und/oder Begasen der Schalen mit einem Austauschgas (MAP) werden die Schalen mit der Deckelfolie 8 luftdicht versiegelt. Anschließend oder gleichzeitig schneidet ein Schneidwerkzeug die Schalen aus der Deckelfolie 8 aus, vereinzelt also die Schalen. Das Restfoliengitter der Deckelfolie 8 wird auf einen Restfoliengitteraufwickler 9 aufgewickelt. Die verschlossenen Schalen werden auf einem Abführband 10 abgelegt, nachdem sie aus der Arbeitsstation 3 mittels der Greifer 6 heraustransportiert wurden. Eine Anzeigevorrichtung 11, die auch Steuerung sein kann, visualisiert den Betriebsablauf und den Betriebszustand der Schalenverschließmaschine 1 und ermöglicht dem Bediener über ein Touchdisplay 12 die Bedienung der Schalenverschließmaschine 1.

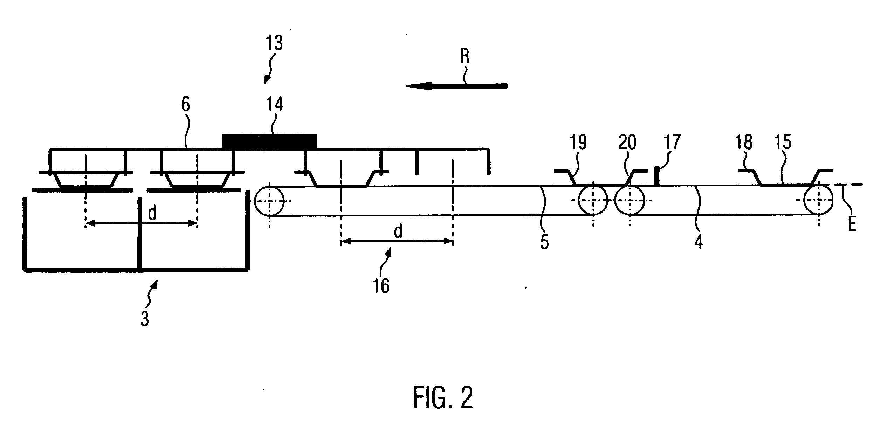

Figur 2 zeigt in einer schematischen Seitenansicht in Produktionsrichtung R von rechts nach links das Zuführband 4, das Sammelband 5 und eine Greifeinrichtung 13, umfassend einen Greiferschlitten 14 und einen Greifer 6. Schalen 15 werden in der Art auf das Sammelband übergeben, dass ein vorgegebener Abstand d zwischen zwei benachbarten Schalen 15 entsteht und die Schalen in der Abholposition 16 auf dem Sammelbands zum Liegen kommen. Der Greifer 6 erfasst die Schalen 15, und der Greiferschlitten 14 bewegt den Greifer 6 in die Arbeitsstation 3.

Die Schalen 15 auf dem Zuführband 4 werden durch einen Sensor 17 erfasst. Wenigstens die vordere Seitenwand 19 wird unterhalb des Schalenrandes 18 und oberhalb der Transportebene E durch den Sensor 17, der vorzugsweise als Lichtschranke ausgeführt ist, erfasst. Für unterschiedliche Ausführungsformen der Schale 15 kann es notwendig sein, den Sensor 17 vertikal verstellbar auszuführen. Bei einer Erfassung der vorderen 19 und hinteren Seitenwand 20 einer Schale 15 kann die Mitte der Schale 15 ermittelt werden und die Steuerung kann die Positionierung der Schale 15 auf den Bändern 4, 5 anhand der Schalenmitte als Referenz ausführen.

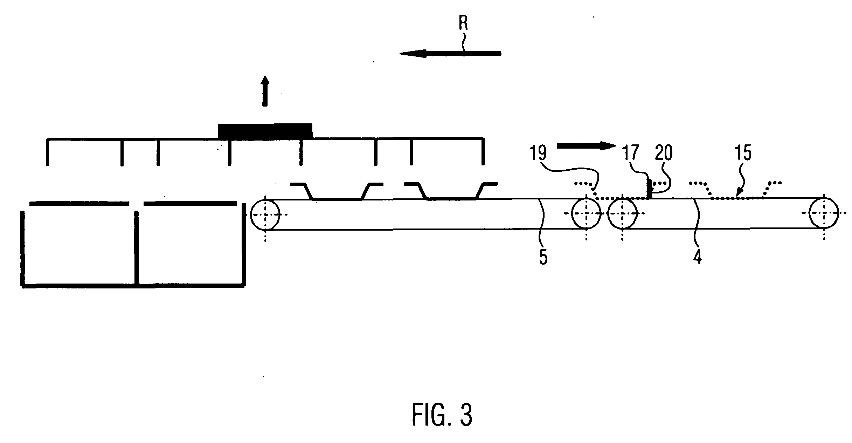

In Figur 3 ist eine Phase eines erfindungsgemäßen Verfahrens zu Beginn des Einlernens gezeigt. Zwei Schalen 15 auf dem Sammelband 5 befinden sich in der Abholposition 16 und der Greifer 6 befindet sich in einer Stellung, in der er eine Bewegung der Schalen auf dem Sammelband 5 ermöglicht. Die zwei Schalen 15 werden vom Sammelband 5 von der Abholposition 16 entgegen der Produktionsrichtung R vorzugsweise langsam bewegt, geschwindigkeitssynchron auf das ebenfalls gegen die Produktionsrichtung laufenden Zuführband 4 übergeben, bis jeweils beide Seitenwände 19, 20 von dem Sensor 17 erfasst wurden. Damit sind die Schalen 15 und ihre Position erfasst und in der Steuerung bekannt.

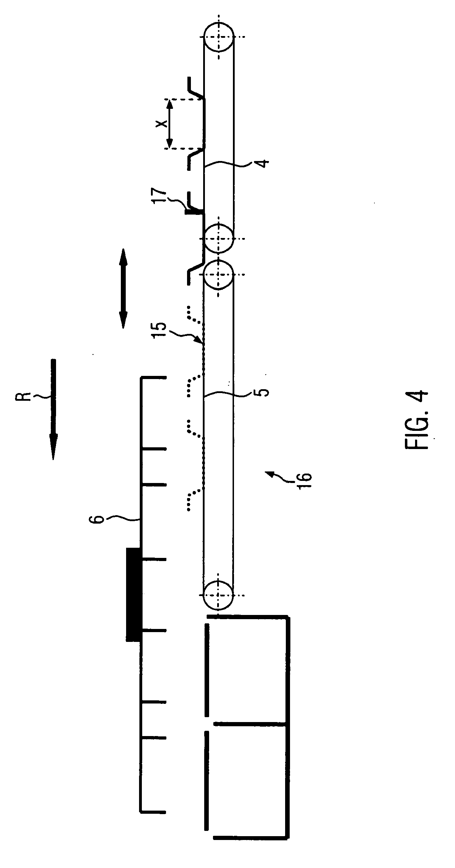

In Figur 4 ist eine Phase eines erfindungsgemäßen Verfahrens zur Ermittlung der maximalen Beschleunigung der Schalen auf den Bändern gezeigt. Dabei ist die Ausführung nicht darauf beschränkt, eine Gruppe von Schalen, die von dem Greifer 6 transportierbar ist, zu bewegen, sondern aus Platzgründen kann dies mit nur einer Schale 15 ausgeführt werden. Dabei könnten Bandübergänge entfallen, wenn die einzelne Schale 15 nur auf dem Zuführband 4 bewegt werden würde.

In diesem Ausführungsbeispiel werden die zwei Schalen 15 von einer Position rechts des Sensors 17 auf dem Zuführband 4 in die Abholposition 16 auf dem Sammelband 5 bewegt und wieder zurück. Bei jedem Richtungswechsel in und/oder entgegen der Produktionsrichtung R wird die Beschleunigung immer wieder erhöht, vorzugsweise um 5%. Bei der Bewegung entgegen der Produktionsrichtung werden die Schalen 15 am Sensor 17 vorbei bewegt und der erfasste Weg von der Abholposition zu der Position am Sensor 17 verglichen mit dem in der Steuerung vorab berechneten theoretischen Wert. Der theoretisch vorab berechnete Wert hat vorzugsweise einen Toleranzbereich, der zulässig ist und durch den Bediener eingebbar ist. Der Toleranzbereich ist abhängig von der Ausgestaltung der Schalen 15 und der Greifer 6; beispielsweise können Schrägen an den Greifern 6 die Schalen 15 noch exakt nachkorrigieren, falls die Position nicht exakt stimmen sollte. Stimmt dieser Wert überein, erfolgt ein weiterer Zyklus der Schalenbewegung mit weiter erhöhter Beschleunigung. Wird von der Steuerung ein Positionsfehler der Schale beim Vorbeifahren am Sensor 17 erkannt, so erfolgt ein Abbruch, und ein gegenüber der Beschleunigung der letzten Bewegung um 5% oder 10% niedrigerer Wert der Beschleunigung wird als Maximalwert in der Steuerung verarbeitet.

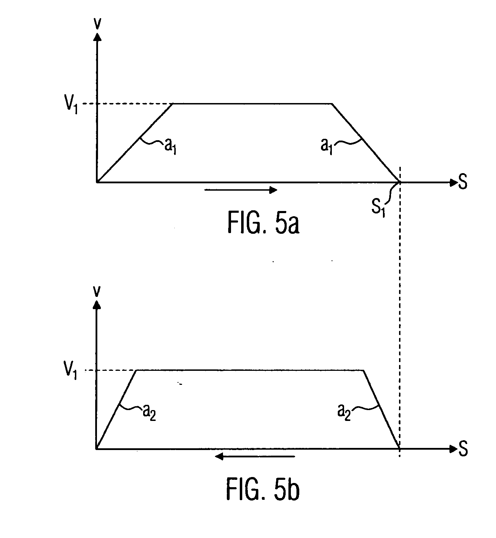

In Figur 5a ist das Bewegungsprofil der Schale 15 (in Pfeilrichtung nach rechts) von der Abholposition 16 in eine Position auf dem Zuführband 4 mit einer Beschleunigung a1 und einer Geschwindigkeit v1 gezeigt, wobei die Schale 15 einen Weg s1 dabei zurücklegt. In Figur 5b ist das Bewegungsprofil nach einer Richtungsumkehr (in Pfeilrichtung nach links) dargestellt, wobei die Beschleunigung a2 größer als die Beschleunigung a1 ist. Die Schale 15 legt dabei den gleichen Weg s1 zurück. Die Geschwindigkeit v muss bei unterschiedlichen Beschleunigungen nicht gleich bleiben, sie kann beispielsweise auch ansteigen.

Dieser Ablauf zur Ermittlung der maximalen Beschleunigung a unter den vorliegenden Bedingungen kann zu einem späteren Zeitpunkt wiederholt werden, wenn sich die Bedingungen für den Schalentransport während des Betriebs der Schalenverschließmaschine 1 verändern.

Die Figur 4 zeigt auch einen Ablauf zur Ermittlung des minimalen geschwindigkeitssynchronen Anteils bei der Bandübergabe vom Zuführband 4 auf das Sammelband 5 bei einer Geschwindigkeit v, die vorzugsweise bei der maximalen Beschleunigung a erreicht wurde. Beim ersten Bandübergang wird die Schale 15 mit einer vom Bediener gemessenen und in die Steuerung eingegebenen Länge x des Schalenbodens geschwindigkeitssynchron vom Zuführband 4 auf das Sammelband 5 übergeben. Nach einem Richtungswechseln, d. h. einem Transport der Schale in umgekehrter Richtung vom Sammelband 5 auf das Zuführband 4, wird der geschwindigkeitssynchrone Anteil reduziert, d.h. dass während der Bandübergabe nicht über die gesamte Länge x des Schalenbodens beide Bänder 4, 5 synchron laufen. Trotz einer reduzierten Strecke mit synchron laufenden Bändern 4, 5 kann die Schale 15 ohne Haftungsverlust sicher über den Bandübergang bewegt werden. Wird der geschwindigkeitssynchrone Anteil der Strecke zu stark reduziert, so kommt es zum Verrutschen der Schale 15 auf den Bändern 4, 5 und bei einer anschließenden Bewegung am Sensor 17 vorbei. Dies wird von der Steuerung, wie beim oben beschriebenen Ablauf zur Ermittlung der maximalen Beschleunigung a, erkannt und der Einlernvorgang beendet. Die Steuerung verarbeitet für den folgenden Betrieb einen Wert für den minimalen geschwindigkeitssynchronen Anteils in Form einer Länge, die 5% bis 10 % höher ist als der Wert zum Zeitpunkt des Abbruchs. Wenn der Bediener visuell beispielsweise eine Verdrehung oder seitliche Verschiebung erkennt, so kann auch er den Einlernvorgang beenden.

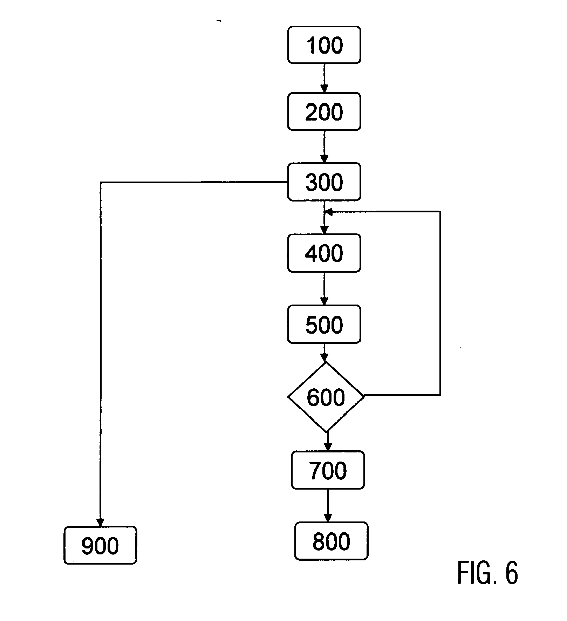

In Figur 6 ist sind anhand eines Ablaufdiagramms verschiedene Phasen eines erfindungsgemäßen Verfahrens gezeigt. Zu Beginn wird bei Schritt 100 das Einlernprogramm aktiviert. Es folgt mit Schritt 200 das Bewegen der Schale 15 von der Abholposition 16 entgegen der Produktionsrichtung R. Bei Schritt 300 wird die Schale 15 vom Sensor 17 erfasst. Der von der Abholposition 16 zum Sensor 17 von der Schale 15 zurückgelegte Weg s wird über den linken Pfad über Schritt 900 an die Steuerung übergeben. Es folgt mit Schritt 400 eine Bewegung der Schale 15 in Produktionsrichtung R mit einer erhöhten Beschleunigung. Nach einem Richtungswechsel erfolgt in Schritt 500 eine Bewegung der Schale 15 entgegen der Produktionsrichtung R mit einer weiter erhöhten Beschleunigung. Wird dabei bei Schritt 600 durch den Sensor 17 die Schale 15 erfasst, findet ein Vergleich des erfassten Wertes durch den Sensor 17 und eines vorab berechneten Vorgabewerts statt. Liegt keine Abweichung vor, so wiederholen sich die Schritte 400, 500 und 600. Kommt es aber bei Schritt 600 zu einer Abweichung, so wird mit Schritt 700 der Einlernvorgang beendet und mit Schritt 800 die zuletzt in Schritt 400 vorgegeben Beschleunigung in der Steuerung als Maximalwert für die dafür vorgesehene Produktion verwendet.

## Patentansprüche

1. Verfahren zum automatischen Einlernen von Parametern für den Betrieb einer Schalenverschließmaschine (1), mit folgenden Schritten:
- Aktivieren eines Einlernprogramms über eine Steuerung,
- Bewegen wenigstens einer Schale (15) mit einer ersten Beschleunigung auf eine erste Geschwindigkeit entgegen einer Produktionsrichtung (R) der Schalenverschließmaschine (1) mittels eines Sammelbands (5),
- Übergeben von Schalen (15) geschwindigkeitssynchron von dem Sammelband (5) auf ein Zuführband (4), das stromaufwärts bezogen auf die Produktionsrichtung (R) vor dem Sammelband (5) angeordnet ist,
- Erfassen einer Position wenigstens einer Schale (15) mittels eines Sensors (17), der entlang des Sammelbands (5) oder des Zuführbands (4) vorgesehen ist,
- Verarbeiten von Weginformationen einer Schale (15) in der Steuerung.

2. Verfahren nach Anspruch 1, **dadurch gekennzeichnet, dass** folgende Schritte vorgesehen sind:
- Ein- oder mehrmaliges Bewegen wenigstens einer Schale (15) mit einem Bewegungsabschnitt in Produktionsrichtung (R) und einem weiteren Bewegungsabschnitts entgegen der Produktionsrichtung (R), wobei bei mindestens jedem zweiten Bewegungsabschnitt die maximal in diesem Bewegungsabschnitt erreichte Beschleunigung (a) erhöht wird,
- Beenden der Einlernphase, nachdem eine Abbruchbedingung erfüllt wurde, und Übernahme eines Beschleunigungswertes, der unterhalb des Beschleunigungswertes beim Beenden war, in die Steuerung.

3. Verfahren nach Anspruch 2, **dadurch gekennzeichnet, dass** die Abbruchbedingung eine mittels des Sensors (17) erkannte Positionsabweichung der Schale (15) auf dem Sammelband (5) oder dem Zuführband (4) ist.

4. Verfahren nach Anspruch 2, **dadurch gekennzeichnet, dass** die Abbruchbedingung ein vom Bediener ausgelöstes Beenden ist, wenn visuell ein unzulässiges Ereignis erkannt wurde.

5. Verfahren nach Anspruch 1, **dadurch gekennzeichnet, dass** folgende Schritte vorgesehen sind:
- Herstellen eines Zustandes der Schalenverschließmaschine (1), bei der eine Schale (15) oder eine Gruppe von Schalen von einer Greifereinheit (13), die einen Greiferschlitten (14) und wenigstens einen Greifer (6) umfasst, freigegeben wird, so dass sich die Schale (15) oder die Gruppe von Schalen in einer Abholposition (16) befindet,
- Erfassen des von der Schale (15) zurückgelegten Weges (s) von der Abholposition (16) bis zum Sensor (17).

6. Verfahren nach Anspruch 5, **dadurch gekennzeichnet, dass** der zurückgelegte Weg (s) in der Steuerung verarbeitet wird, und/oder eine vordere Seitenwand (19) und hintere Seitenwand (20) der Schale (15) mittels des Sensors (17) erfasst wird und eine Länge (x) der Schale (15) in der Steuerung verarbeitet wird, um vorzugsweise die Mitte der Schale (15) zu ermitteln.

7. Verfahren nach Anspruch 6, **dadurch gekennzeichnet, dass** der Greiferschlitten (14) in die Abholposition (16) für die Schale (15) oberhalb des Sammelbands (5) verfährt.

8. Verfahren nach Anspruch 6 oder 7, **dadurch gekennzeichnet, dass** die mit Produkt gefüllte Schale (15) in die geschlossenen Greifer (6) innerhalb der Arbeitsstation (3) eingelegt wird oder die Schale (15) in eine Schalenauflage der Arbeitsstation (3) eingelegt.

9. Verfahren nach Anspruch 1, **dadurch gekennzeichnet, dass** folgende Schritte vorgesehen sind:
- Übergeben der Schale (15) vom Zuführband (4) auf das Sammelband (5) oder vom Sammelband (5) auf das Zuführband (4), wobei die Übergabe einen geschwindigkeitssynchronen und einen geschwindigkeitsasynchronen Anteil aufweist.
- Wiederholendes Übergeben der Schale (15) zwischen dem Sammelband (5) und dem Zuführband (4) mit einer beim jedem Richtungswechsel oder bei jedem zweiten Richtungswechsel weiter verringerten geschwindigkeitssynchronen Anteil, bis mittels des Sensors (17) von der Steuerung ein Positionsfehler der Schale (15) festgestellt wird,
- Beenden der Einlernphase und Übernahme eines Wertes für die Zeit oder den Weg (s) des geschwindigkeitssynchronen Anteils, der mindestens so groß ist wie der beim Beenden der Einlernphase eingenommene Wert, in die Steuerung.

10. Verfahren nach Anspruch 9, **dadurch gekennzeichnet, dass** der Wert des geschwindigkeitssynchronen Anteils, der in die Steuerung übernommen wird, wenigstens um 2%, vorzugsweise um 5%, größer ist als der beim Beenden der Einlernphase eingenommenen Wert oder der letzte Wert, bei dem noch kein Abbruch ausgelöst wurde.
